# EUROPÄISCHE PATENTSCHRIFT

(11) **EP 1 196 804 B1**
(45) Veröffentlichungstag und Bekanntmachung des Hinweises auf die Patenterteilung: **28.11.2007**
(21) Anmeldenummer: 01938169.8
(22) Anmeldetag: 05.05.2001
(51) Int. Cl.: G02B 21/00, G02B 23/10

(54) **OPTISCHES BEOBACHTUNGSGERÄT MIT EINER EINRICHTUNG ZUM EINBRINGEN VISUELL WAHRNEHMBARER INFORMATIONEN IN DEN BEOBACHTUNGSSTRAHLENGANG**
OPTICAL OBSERVATION APPARATUS PROVIDED WITH A SYSTEM DELIVERING INFORMATION VISUALLY PERCEPTIBLE IN THE OBSERVATION BEAM PATH
APPAREIL D'OBSERVATION OPTIQUE DOTE D'UN SYSTEME D'APPORT D'INFORMATIONS PERCEPTIBLES VISUELLEMENT DANS LA TRAJECTOIRE DU FAISCEAU D'OBSERVATION

(30) Priorität: 18.05.2000 DE 10024686
(43) Veröffentlichungstag der Anmeldung: 17.04.2002
(73) Patentinhaber: Carl Zeiss MicroImaging GmbH, 07745 Jena (DE)
(72) Erfinder: KAUFHOLD, Tobias, 07749 Jena (DE); KNOBLICH, Johannes, 07747 Jena (DE); JOHN, Matthias, 07751 Kleinpürschütz (DE)
(74) Vertreter: Scholze, Humbert
(86) Internationale Anmeldenummer: PCT/EP2001/005081
(87) Internationale Veröffentlichungsnummer: WO 2001/088591

(56) Entgegenhaltungen:
- DE-A- 3 207 973
- US-A- 4 149 795
- US-A- 5 616 903
- US-A- 5 969 791
- PATENT ABSTRACTS OF JAPAN vol. 018, no. 567 (P-1820), 28. Oktober 1994 (1994-10-28) & JP 06 208087 A (MITSUBISHI ELECTRIC CORP), 26. Juli 1994 (1994-07-26)
- PATENT ABSTRACTS OF JAPAN vol. 011, no. 201 (P-590), 30. Juni 1987 (1987-06-30) & JP 62 021114 A (CANON INC), 29. Januar 1987 (1987-01-29)
- PATENT ABSTRACTS OF JAPAN vol. 2000, no. 11, 3. Januar 2001 (2001-01-03) & JP 2000 214387 A (MITSUTOYO CORP), 4. August 2000 (2000-08-04)

## Beschreibung

Die Erfindung bezieht sich auf ein Beobachtungsgerät, bei dem eine Einrichtung zum Einbringen visuell wahrnehmbarer Informationen, die bevorzugt die eingestellten Geräte-Parameter, die aktuellen Betriebszustände und/oder das zu beobachtende Objekt betreffen, vorgesehen ist.

Die Einbelichtung von Probendaten und auch die Einspiegelung anderweitiger visuell wahrnehmbarer Informationen in den Strahlengang optischer Beobachtungsgeräte sind vor allem in der Mikroskopie bekannt und spielen dort insbesondere bei der Herstellung von mikroskopischen Fotografien eine wichtige Rolle. Das wird beispielsweise erzielt, indem neunstellige LED-Ziffern in die Filmebene am Formatrand abgebildet werden.

Die bisher zu diesem Zweck entwickelten Anordnungen sehen vor, daß die angezeigten Informationen bzw. Daten über Teilerspiegel oder ähnliche Vorrichtungen an einer geeigneten Stelle in den Strahlengang eingespiegelt werden und damit für den Beobachter innerhalb des Bildfeldes bzw. für eine Kamera in der Filmebene sichtbar werden.

Bei optischen Beobachtungsgeräten, insbesondere Mikroskopen, an die Bildverarbeitungsysteme angeschlossen sind, ist die Einblendung der Daten bzw. Informationen mit Hilfe von Rechnersoftware in das Monitorbild üblich.

Bei Camcordern beispielsweise werden Zusatzinformationen im Okular sichtbar gemacht, indem mit. Hilfe von Software entsprechende Daten auf einer LCD-Matrix generiert werden. Diese Zusatzinformationen und die auf der LCD-Matrix sichtbare Struktur eines aufgenommenen Bildes wird gemeinsam in den Beobachtungsstrahlengang eingespiegelt und können mit Hilfe der Okularoptik bzw. einer Lupe betrachtet werden. Mit anderen Worten: Die Bildinformation und die Zusatzinformationen werden mit Hilfe eines gemeinsamen Anzeigeelementes, der LCD-Matrix, wiedergegeben. Dabei ist die Bildauflösung durch die Größe der LCD-Einzelpixel begrenzt.

Von diesem Stand der Technik ausgehend besteht die Aufgabe der Erfindung darin, die Einspiegelung von Daten in den Beobachtungsstrahlengang eines optischen Beobachtungsgerätes mit verringertem technischen Aufwand erzielen.

Diesbezüglich ist erfindungsgemäß bei einem optischen Beobachtungsgerät mindestens ein Okular vorgesehen, wobei in der Zwischenbildebene des Okulars eine Einrichtung zur visuell wahrnehmbaren Darstellung von Informationen angeordnet ist. Damit wird bei geringem gerätetechnischen Aufwand effektiv das Einbringen von Zusatzinformationen in den Beobachtungsstrahlengang erreicht, denn es sind im Gegensatz zum Stand der Technik keine Teilerspiegel oder ähnliche optische Baugruppen erforderlich. Außerdem wird auf diese Weise verhindert, daß die Intensität des beobachteten Bildes durch zusätzliche Teilerspiegel oder ähnlich unnötigerweise abgeschwächt wird.

In der JP 06-208087A ist ein Display offenbart, welches über einen Spiegel virtuell in die Bildebene eines Teleskops oder Mikroskops eingespiegelt wird.

Die DE 32 07 973A zeigt eine optische Einrichtung mit einer im Außenrandbereich der Sehfeldblende angebrachten festen Skala, welche von hinten beleuchtet wird.

Aus der JP 62-021114A ist ein Mikroskop mit einer Displayeinheit entnehmbar, welche eine Skala in das Bildfeld über die Probe projiziert und welche über Mittel zur Darstellung alphanumerischer Zeichen verfügt.

Auch die US 5 969 791A zeigt eine solche sich über das gesamte Bildfeld erstreckende Displayeinheit, welche durch das Einbringen von Licht von ausserhalb des Bildfelds angeordneten Laserdiodenarrays mittels Wellenleiterarrays in das Bildfeld realisiert wird.

Mit der erfindungsgemäßen Anordnung ergibt sich für den Beobachter der Vorteil, daß zusätzliche Informationen, wie beispielsweise zu eingestellten Geräte-Parametern, zu dem Betriebszustand des Gerätes und/oder zur Probe wahrgenommen werden können, ohne daß dabei die Okularbeobachtung aufgegeben werden muß. Die Beobachtung kann ohne Unterbrechung konzentriert weiter vorgenommen werden.

In der Erfindung ist vorgesehen, daß in der Zwischenbildebene des Okulars ein mit einer Ansteuerelektronik verbundenes selbstleuchtendes LED-Display oder ein mit einer Ansteuerelektronik verbundenes LCD-Display mit Hintergrundbeleuchtung eingeordnet ist, auf denen die Informationen generiert werden.

Es ist außerdem vorgesehen, daß nicht nur das LCD- bzw. LED-Display, sondern auch die Ansteuerelektronik in den Okulartubus integriert und von dort über Ansteuer- und Versorgungsleitungen mit einer zentralen Bedien- und Versorgungseinrichtung des Gerätes verbunden ist. Damit ergibt sich ein weiterhin vereinfachter und platzsparender Aufbau.

Erfindungsgemäß ist außerdem vorsehen, daß die Darstellung der Informationen außerhalb des der Beobachtung vorbehaltenen Bildfeldbereiches erfolgt. Damit wird eine negative Beeinflussung der bisher guten optischen Bildqualität der Okularbeobachtung vermieden, d.h. die Bildqualität bleibt erhalten bei Bereitstellung von zusätzlichen Informationen für den Beobachter.

Die Erfindung bezieht sich weiterhin auf ein Okular als eigenständige Baugruppe zur Nachrüstung für optische Geräte, insbesondere für Mikroskope, bei dem in der Zwischenbildebene eine Einrichtung zur visuell wahrnehmbaren Darstellung von Informationen nach den vorgenannten Ausführungen vorgesehen ist und das bezüglich Form, Größe und Befestigungsmitteln so ausgebildet wie die Okulare, die eine solche Einrichtung nicht aufweisen.

Damit ist eine optische Baugruppe geschaffen, mit welcher die bereits beschriebenen Vorteile auch für Mikroskope bzw. anderweitige optische Beobachtungsgeräte nutzbar gemacht werden können, indem die bisher verwendeten Okulare gegen das erfindungsgemäße Okular ausgetauscht werden.

Zu diesem Zweck kann das Okular mit Befestigungselementen versehen sein, die der Halterung des bisher verwendeten Okulars in dem betreffenden optischen Gerät angepaßt sind, so daß ein Austausch mit wenigen Handgriffen möglich ist. Die Ansteuer- und Stromversorgung kann über eine genormte Schnittstelle, beispielsweise eine RS232-Schnittstelle zu einer zentralen Bedien- und Versorgungseinrichtung des optischen Gerätes erfolgen.

Die Erfindung soll nachfolgend anhand eines Ausführungsbeispieles näher erläutert werden. In den zugehörigen Zeichnungen zeigen
- Fig.1: Schematische Darstellung eines Mikroskops, das mit dem erfindungsgemäßen Okular ausgerüstet ist,
- Fig.2: ein Beispiel für die Anordnung von einer achtstelligen Anzeige sowie von weiteren fünf LED-Punkten außerhalb des Bildes im Sehfeldrand der Zwischenbildebene eines Okulars.

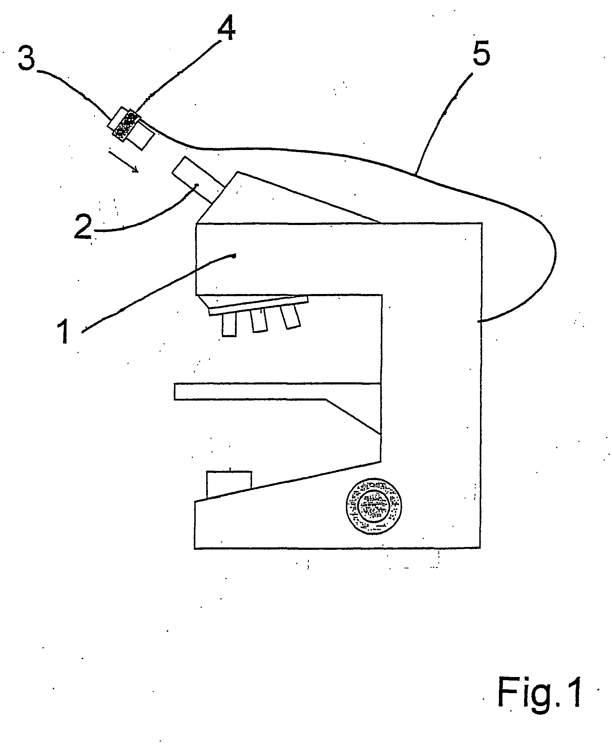

In Fig.1 ist ein Mikroskopaufbau 1 mit einem Okulartubus 2 dargestellt. In den Okulartubus 2, einsteckbar ist ein Okular 3, welches erfindungsgemäß mit einer Einrichtung 4 zum Einblenden von Informationen in den Mikroskopstrahlengang, beispielsweise mit einem ansteuerbaren, selbstleuchtenden LED-Display, ausgestattet ist.

Das so ausgebildete Okular ist über eine Ansteuer- und Versorgungsleitung 5 mit der zentralen Bedien- und Versorgungseinrichtung des Mikroskops (zeichnerisch nicht dargestellt) verbunden. Dabei ist Einrichtung 4 mit einer Ansteuerelektronik gekoppelt, die ebenso wie die. Einrichtung 4 entweder in das Okular 3 integriert ist.

Die Einrichtung 4 ist in der Zwischenbildebene des Okulars 3 so positioniert, daß die Darstellung der Informationen außerhalb des der Beobachtung vorgehaltenen Bildfeldbereiches im Mikroskopstrahlengang erfolgt.

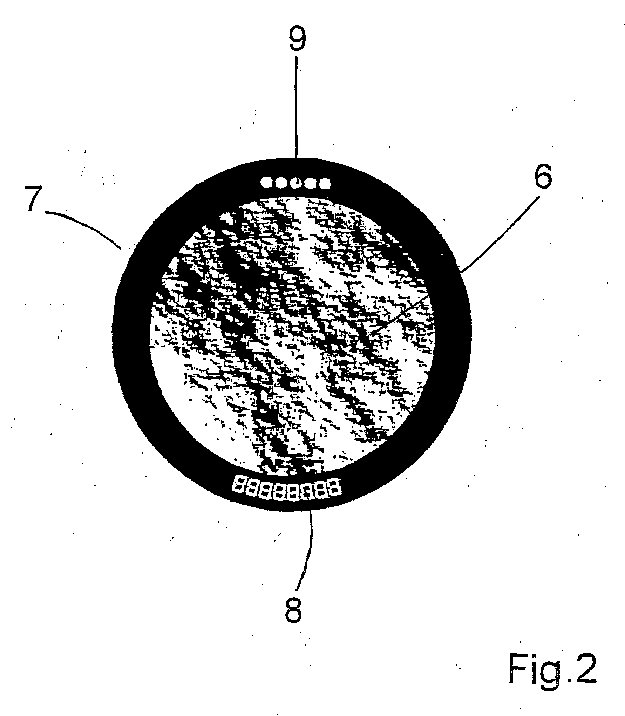

Besonders bevorzugt ist die Einrichtung 4 in der Zwischenbildebene so positioniert, daß sich beim Blick in das Okular 3 eine Wahrnehmung ergibt, wie sie in Fig.2 dargestellt ist. Hier ist im Zentrum in herkömmlicher guter Bildqualität der klassischen Okularbeobachtung ein Probenausschnitt 6 im Bildfeldbereich des Mikroskopstrahlenganges 7 erkennbar. An der Peripherie ist eine achtstellige Anzeigeeinrichtung 8 sowie dieser diametral gegenüberliegend eine weitere aus fünf LED-Punkten bestehende Anzeigeeinrichtung 9 vorgesehen. Damit sind die Anzeigeeinrichtungen 8 und 9 außerhalb des Zwischenbild-Sehfeldrandes positioniert und beeinflussen die Beobachtung des Probenausschnittes 6 nicht negativ.

Insbesondere können mit den Anzeigeeinrichtungen 8 und 9 aktuelle Einstellparameter des Mikroskops, beispielsweise Vergrößerung und Arbeitsabstand, Meßwerte, wie Fokusposition oder Intensität, Betriebszustände des Beobachtungsgerätes, wie etwa eingeschaltete Filterpositionen, eingeschaltete Lichtquellen, benutzter optischer Strahlengang und ähnlich angezeigt werden.

### Bezugszeichenliste

- 1: Mikroskopaufbau
- 2: Okulartubus
- 3: Okular
- 4: Einrichtung
- 5: Ansteuer- und Versorgungsleitung
- 6: Probenausschnitt
- 7: Mikroskopstrahlengang
- 8: Anzeigeeinrichtung
- 9: Anzeigeeinrichtung

## Patentansprüche

1. Optisches Beobachtungsgerät (1) zum Beobachten einer Probe mit mindestens einem Okular (3), bei dem in der Zwischenbildebene eine Einrichtung (4,8,9) zur visuell wahrnehmbaren Darstellung von Informationen, die bevorzugt die eingestellten Geräte-Parameter, die aktuellen Betriebszustände und/oder das zu beobachtende Objekt betreffen, angeordnet ist, wobei diese Einrichtung ein mit einer Ansteuerelektronik verbundenes selbstleuchtendes LED-Display oder ein mit einer Ansteuerelektronik verbundenes LCD-Display mit Hintergrundbeleuchtung ist, welches ausserhalb des Bildfeldbereiches visuell wahrnehmbar ist, der der Beobachtung einer Probe vorbehalten ist, und wobei die Ansteuerelektronik in dem Okular (3) integriert und von dort über Ansteuer- und Versorgungsleitungen (5) mit einer zentralen Bedien- und Versorgungseinrichtung des Beobachtungsgerätes (1) verbunden ist.

2. Okular für optische Beobachtungsgeräte mit einer in der Zwischenbildebene angeordneten Einrichtung zur visuell wahrnehmbaren Darstellung von Informationen nach einem der vorgenannten Ansprüche und in Form, Grösse und Befestigungsmitteln ausgebildet wie ein Okular, das eine solche Einrichtung nicht aufweist, wodurch an optischen Beobachtungsgeräten ein Austausch der Okulare mit und ohne derartige Einrichtung gegeneinander möglich ist.

## Claims

1. Optical viewing apparatus (1) for viewing a sample having at least one eye-piece (3), in which in the intermediate image plane there is disposed a device (4, 8, 9) for the visually discernible presentation of information which relates preferably to the set apparatus-parameters, the current operating states and/or the object to be viewed, wherein this device is a self-illuminating LED-display which is connected to control electronics, or is an LCD-display which is connected to control electronics, has background illumination and which is visually discernible outside the image field region which is reserved for viewing a sample, and wherein the control electronics are integrated in the eye-piece (3) from where they are connected via control and supply lines (5) to a central operating and supply device of the viewing apparatus (1).

2. Eye-piece for optical viewing apparatuses having a device which is disposed in the intermediate image plane for the visually discernible presentation of information as claimed in any one of the preceding claims and is formed in terms of shape, size and fastening means like an eye-piece which does not comprise a device of this type, whereby on optical viewing apparatuses it is possible to interchange the eye-pieces with and without a device of this type.

## Revendications

1. Appareil d'observation optique (1) pour l'observation d'un échantillon avec au moins un oculaire (3), dans lequel est disposée dans le plan d'image intermédiaire une installation (4, 8, 9) pour la représentation perceptible visuellement d'informations qui concernent de préférence les paramètres réglés de l'appareil, les états de fonctionnement actuels et/ou l'objet à observer, cette installation étant un affichage DEL auto-lumineux relié à une électronique de commande ou un affichage DEL, relié à une électronique de commande, avec éclairage de fond, qui est visuellement perceptible à l'extérieur de la zone de champ d'image qui est réservée à l'observation d'un échantillon, et où l'électronique de commande est intégrée dans l'oculaire (3) et est reliée de là par des lignes de commande et d'alimentation (5) à une installation de commande et d'alimentation centrale de l'appareil d'observation (1).

2. Oculaire pour des appareils d'observation optiques avec une installation disposée dans le plan d'image intermédiaire pour la représentation visuellement perceptible d'informations selon l'une des revendications précitées et réalisé, quant à la forme, la grandeur et aux moyens de fixation, comme un oculaire qui ne présente pas une telle installation, par quoi à des appareils d'observation optiques, un échange des oculaires, avec et sans une telle installation, est possible l'un par l'autre.
